# FASCICULE DE BREVET EUROPEEN

(11) **EP 4 669 979 B1**
(45) Date de publication et mention de la délivrance du brevet: **11.11.2026**
(21) Numéro de dépôt: 24710148.8
(22) Date de dépôt: 20.02.2024
(51) Int. Cl.: G01S 5/02, G07C 9/00, H04W 4/02, H04W 4/029, H04W 4/20, G07C 11/00

(54) **DISPOSITIF DE DETERMINATION DE TRAJECTOIRE**
VORRICHTUNG ZUR ERMITTLUNG EINER TRAJEKTORIE
APPARATUS FOR DETERMINING A TRAJECTORY

(30) Priorité: 24.02.2023 FR 2301710
(43) Date de publication de la demande: 31.12.2025
(73) Titulaire: Intersec, 92085 Paris La Défense Cédex (FR)
(72) Inventeur: CUNY, Pierre-Louis, 92085 Paris La Défense Cedex (FR)
(74) Mandataire: Cabinet Netter
(86) Numéro de dépôt international: PCT/FR2024/050222
(87) Numéro de publication internationale: WO 2024/175857

(56) Documents cités:
- FR-A1- 3 063 168
- KATSIKOULI PANAGIOTA ET AL: "Characterizing and Removing Oscillations in Mobile Phone Location Data", 2019 IEEE 20TH INTERNATIONAL SYMPOSIUM ON "A WORLD OF WIRELESS, MOBILE AND MULTIMEDIA NETWORKS" (WOWMOM), IEEE, 10 June 2019 (2019-06-10), pages 1 - 9, XP033594867, DOI: 10.1109/WOWMOM.2019.8793034

## Description

L'invention concerne le domaine de la détection de trajectoire, plus particulièrement de manière passive, à partir de évènements de signalisation associées à un dispositif mobile.

Il est complexe de déterminer les flux de personnes qui se déplacent entre divers endroits. Pour un endroit donné, il est possible de déterminer des flux de manière statistique, en mesurant humainement le nombre de personnes qui rentrent et sortent. Cependant, ces méthodes sont peu fiables, présentent un coût important, et sont pauvres en informations contextuelles. En effet, il n'est pas possible de savoir quel est le lieu d'origine des personnes comptées, quels sont les moyens de transport utilisés, etc.

La Demanderesse a déjà inventé plusieurs dispositifs permettant de déterminer des données de trajectoire à partir de évènements de signalisation associées à un dispositif mobile. Ainsi, le brevet européen publié sous le numéro EP 3 329 696 décrit la définition de labels de type arrêt ou mouvement à des paires de évènements de signalisations consécutives dans le temps, et le traitement de ces labels afin d'établir des données de trajectoire. La demande de brevet publiée sous le numéro EP 3 586 319 décrit une amélioration de ce brevet permettant de déterminer un mode de transport associé à des données de trajectoire.

La Demanderesse a aussi étudié des articles scientifiques. Parmi ceux-ci, l'article de Calabrese et al. "Estimating origin-destination flows using mobile phone location data", IEEE Pervasive Computing (Volume: 10, Issue: 4, April 2011) décrit l'utilisation de données de téléphonie mobile et définit, parmi une suite de localisations, les arrêts comme étant constitués des ensembles de localisations dont les distances deux à deux sont inférieures à un seuil donné, typiquement un kilomètre. Cette approche est simpliste et ne permet pas de traiter le problème du bagot, c'est-à-dire l'attache successive à différentes antennes, potentiellement très éloignées, alors qu'il n'y a pas ou peu de mouvement réel.

L'article de Leontiadis et al., "From cells to streets: Estimating mobile paths with cellular-side data", CoNEXT 2014 - Proceedings of the 2014 Conference on Emerging Networking Experiments and Technologies, 121-132, utilise un seuil de temps pour classifier la stationnarité, mais dans une approche où le seuil de distance est "remplacé" par des considérations d'intersection entre la couverture d'une antenne et une case d'une grille découpant le territoire, des localisations sur des antennes étant considérées comme "proches" si leurs couvertures recouvrent la même case de cette grille. Là encore, le bagot n'est pas traité de manière optimale.

L'article de Ishizuka et al., "Traffic Analysis of Railway using Call Detail Records", accessible à l'adresse http://web.archive.org/web/20220125110421/https://netmob.org/www17/assets/img/boo kofabstract_oral_2017.pdf, fait le constat que les approches décrites ci-dessus présentent le défaut de devoir définir des seuils parfois arbitraires, impactant fortement les résultats. Ainsi, un seuil de distance très élevé détectera correctement les grands déplacements ("vision large"), mais manquera de petits déplacements au sein des stops générés, alors qu'un seuil faible ("vision précise") détectera ces déplacements mais créera du bruit du fait du bagot télécom. Les auteurs imaginent pour compenser une approche combinant les résultats de deux seuils de distance appliqués, la vision précise ajustant les grands trajets détectés par la vision large. Cet article, bien que plus sophistiqué que les deux précédents, n'offre pour autant pas satisfaction dans la pratique, les distances inter-antennes liées au bagot télécom pouvant grandement varier.

Enfin, l'article de Xu et al. "Effects of Data Preprocessing Methods on Addressing Location Uncertainty in Mobile Signaling Data", Annals of the American Association of Geographers, 111:2, 515-539, évoque des méthodologies pour réduire le bruit inhérent aux données mobiles, notamment en cas de connexion en très peu de temps à des antennes distantes avec retour rapide à une antenne sur laquelle le mobile s'était préalablement connecté. Ces méthodologies sont néanmoins dépendantes de la notion de réapparition sur une même antenne, ce qui n'est bien sûr pas toujours le cas.

Ces dispositifs et articles, bien qu'intéressants, présentent des possibilités d'amélioration importantes, notamment pour mieux tenir compte des durées relatives séparant les divers évènements.

De plus, les recherches de la Demanderesse ont révélé que les trajectoires qui résultent de ces articles restent améliorables. Celles-ci sont encore sensibles au bagot, en particulier en zone urbaine. En effet, les traitements du bagot peuvent amener à écarter des évènements qui participent d'une trajectoire plus réaliste.

L'invention vient améliorer la situation. À cet effet, elle propose un dispositif de détermination de trajectoire agencé pour recevoir des évènements de signalisation de réseau de téléphonie mobile ou sans-fil comprenant chacun un identifiant de dispositif mobile de communication, un marqueur de temps et un identifiant de signalisation associé à un emplacement et à un rayon de localisation, et pour retourner des données de trajectoire comprenant des segments de trajectoire comprenant chacun deux marqueurs de temps formant bornes tirés des marqueurs de temps des évènements de signalisation, chaque segment étant associé à un label de type mouvement ou de type arrêt, le dispositif étant agencé pour raffiner les segments de trajectoire associés à un label de type mouvement en regroupant les évènements de signalisation correspondant à des segments de trajectoires associés à un label de type mouvement compris entre deux segments de trajectoires associés à un label de type arrêt dans des groupes de mouvement, en générant un graphe pour chaque groupe mouvement au sein duquel chaque évènement de signalisation est relié à l'évènement de signalisation dont le marqueur de temps lui est immédiatement successif temporellement et à tout évènement de signalisation tel que la durée entre leurs marqueurs de temps respectifs est inférieure à une durée de seuil de voisinage, en calculant le plus court chemin au sein de chaque graphe à partir des distances entre les emplacements associés à chaque évènement de signalisation, et en retournant des données de trajectoire modifiées dans lesquelles les segments de trajectoire associés à un label de type mouvement sont redéfinis par paire de marqueurs de temps consécutifs à partir des évènements de signalisation retenus pour le chemin le plus court calculé pour chaque graphe.

Ce dispositif est particulièrement avantageux car il permet de raffiner les données de trajectoire en enrichissant les données de signalisation, afin de s'offrir la possibilité de reconstruire la trajectoire qui est la plus probable. Cela permet de venir raffiner les données de trajectoire initiales, et de retourner des données de trajectoire bien plus fidèles à la réalité que dans les solutions de l'état de l'art.

Selon divers modes de réalisation, l'invention peut présenter une ou plusieurs des caractéristiques suivantes :
- le dispositif est agencé pour exclure de chaque graphe les liaisons pour lesquelles la distance entre les emplacements des évènements de signalisation excède une distance seuil de voisinage, sauf lorsque cette exclusion a pour conséquence qu'un évènement de signalisation qui n'est pas une extrémité d'un graphe ne présente aucune liaison vers un évènement de signalisation dont le marqueur de temps est ultérieur, ou aucune liaison vers un évènement de signalisation dont le marqueur de temps est antérieur, et
- lorsque une opération a pour conséquence qu'un évènement de signalisation qui n'est pas une extrémité d'un graphe ne présente qu'une liaison vers un évènement de signalisation dont le marqueur de temps est ultérieur, le dispositif est agencé pour sélectionner les évènements de signalisation présentant un marqueur de temps antérieur d'une durée de seuil d'extension à celui de cet évènement de signalisation, l'évènement de signalisation qui lui est immédiatement consécutif et les évènements de signalisations présentant un marqueur de temps postérieur de la durée de seuil d'extension à l'évènement de signalisation qui lui est immédiatement consécutif, et pour relier entre eux tous les évènements de signalisation ainsi sélectionnés dans le graphe concerné.

L'invention concerne également un procédé de détermination de trajectoire comprenant les opérations suivantes :
a) recevoir des évènements de signalisation de réseau de téléphonie mobile ou sans-fil comprenant chacun un identifiant de dispositif mobile de communication, un marqueur de temps et un identifiant de signalisation associé à un emplacement et à un rayon de localisation,
b) retourner des données de trajectoire comprenant des segments de trajectoire comprenant chacun deux marqueurs de temps formant bornes tirés des marqueurs de temps des évènements de signalisation, chaque segment étant associé à un label de type mouvement ou de type arrêt,
c) regrouper les évènements de signalisation correspondant à des segments de trajectoires associés à un label de type mouvement compris entre deux segments de trajectoires associés à un label de type arrêt dans des groupes de mouvement,
d) générer un graphe pour chaque groupe mouvement au sein duquel chaque évènement de signalisation est relié à l'évènement de signalisation dont le marqueur de temps lui est immédiatement successif temporellement et à tout évènement de signalisation tel que la durée entre leurs marqueurs de temps respectifs est inférieure à une durée de seuil de voisinage,
e) calculer le plus court chemin au sein de chaque graphe à partir des distances entre les emplacements associés à chaque évènement de signalisation, et
f) retourner des données de trajectoire modifiées dans lesquelles les segments de trajectoire associés à un label de type mouvement sont redéfinis par paire de marqueurs de temps consécutifs à partir des évènements de signalisation retenus pour le chemin le plus court calculé pour chaque graphe.

Selon divers modes de réalisation, le procédé peut présenter une ou plusieurs des caractéristiques suivantes:
- l'opération d) comprend exclure de chaque graphe les liaisons pour lesquelles la distance entre les emplacements des évènements de signalisation excède une distance seuil de voisinage, sauf lorsque cette exclusion a pour conséquence qu'un évènement de signalisation qui n'est pas une extrémité d'un graphe ne présente aucune liaison vers un évènement de signalisation dont le marqueur de temps est ultérieur, ou aucune liaison vers un évènement de signalisation dont le marqueur de temps est antérieur, et
- lorsque l'opération d) a pour conséquence qu'un évènement de signalisation qui n'est pas une extrémité d'un graphe ne présente qu'une liaison vers un évènement de signalisation dont le marqueur de temps est ultérieur, les évènements de signalisation présentant un marqueur de temps antérieur d'une durée de seuil d'extension à celui de cet évènement de signalisation, l'évènement de signalisation qui lui est immédiatement consécutif et les évènements de signalisations présentant un marqueur de temps postérieur de la durée de seuil d'extension à l'évènement de signalisation qui lui est immédiatement consécutif sont sélectionnés et reliés entre eux dans le graphe concerné.

L'invention concerne également un programme informatique comprenant des instructions pour exécuter le procédé selon l'invention, un support de stockage de données sur lequel est enregistré un tel programme informatique et un système informatique comprenant un processeur couplé à une mémoire, la mémoire ayant enregistré un tel programme informatique.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un diagramme schématique d'un dispositif selon l'invention,
- la figure 2 représente un exemple de mise en œuvre d'une boucle de fonctionnement du dispositif de la figure 1,
- la figure 3 représente une mise en œuvre exemplaire d'une fonction d'une opération de la figure 2,
- la figure 4 représente une mise en œuvre exemplaire d'une fonction d'une opération de la figure 2,
- la figure 5 représente une mise en œuvre exemplaire d'une fonction d'une opération de la figure 2, et
- la figure 6 représente une mise en œuvre exemplaire d'une fonction d'une opération de la figure 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

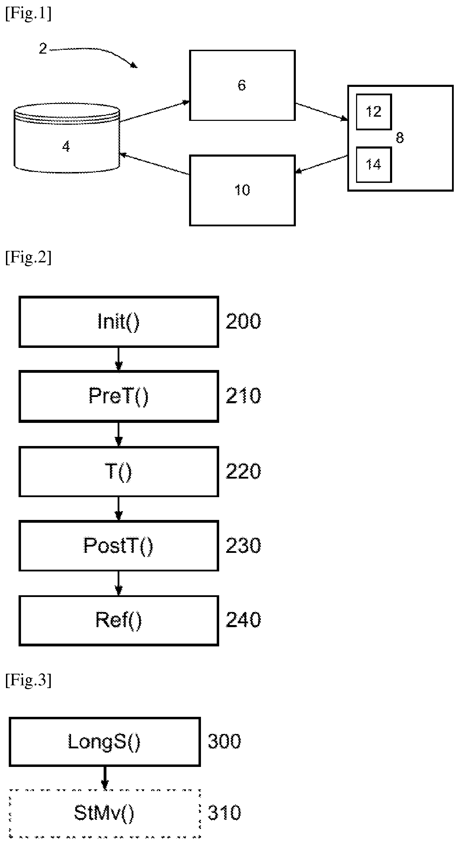

La figure 1 représente un diagramme schématique d'un dispositif 2 selon l'invention. Le dispositif 2 comprend une mémoire 4 une unité de prétraitement 6, une unité de traitement 8 et une unité de post-traitement 10. L'unité de traitement comprend un lisseur 12 et un compacteur 14.

Comme mentionné en introduction, le domaine de l'invention concerne la détermination de données de trajectoires à partir de données générées passivement par les dispositifs tels que les téléphones portables. Il s'agit notamment de toutes les données liées à la signalisation et à l'attachement à des antennes de communication sans fil, qu'elles soient radiotéléphoniques (cellulaires) ou du type wifi.

Les sources de données de géolocalisation, particulièrement dans les réseaux cellulaires, sont telles que la fréquence de ces localisations peut être très variables, avec parfois plusieurs localisations en quelques secondes, avant une longue période (plusieurs dizaines de minutes voire plusieurs heures) sans aucune nouvelle localisation. L'état de l'art ne traite pas de ce point ni de comment les algorithmes envisagés devraient être adaptés à ces différents cas. En particulier, aucun ne prévoit la possibilité d'un découpage en périodes de pause et de déplacement qui se fasse sur une heure à laquelle aucune localisation n'est fournie.

Les données utilisées dans le cadre de l'invention sont stockées dans la mémoire 4. Ces données concernent principalement ce qui sera qualifié par la suite d'évènements de signalisation. Les évènements de signalisation comprennent chacun un identifiant de dispositif mobile de communication, un marqueur de temps et un identifiant de signalisation associé à un emplacement et à un rayon de localisation. Ainsi, l'identifiant de dispositif mobile de communication est l'identifiant utilisé sur le réseau concerné (IMSI en cellulaire, Mac en wifi, etc.), le marqueur de temps est l'heure de l'évènement concerné, et l'identifiant de signalisation est la cellule ou l'antenne concernée par cet évènement. Ainsi, l'identifiant de signalisation désigne un emplacement, à savoir le centre de la cellule ou l'emplacement connu de l'antenne, et un rayon de localisation, qui correspond à la zone de couverture de la cellule ou de l'antenne. Bien que le terme rayon soit utilisé ici, la couverture n'est en général pas circulaire, mais correspond plutôt à un arc de cercle.

Ces localisations sont potentiellement issues d'un opérateur de téléphonie mobile, qui peut avoir accès à une localisation "précise" sur son territoire, et seulement connaître le pays d'itinérance en cas de déplacement à l'étranger d'un de ses abonnés, c'est-à-dire sans pouvoir le localiser dans le pays de destination. Dans ce cas, également désigné par terme "roaming" en anglais, la localisation retenue pourra se baser sur des coordonnées uniques pour le pays de destination, situées au barycentre du pays.

De manière optionnelle, le référentiel des antennes de l'opérateur - la liste des antennes avec leurs coordonnées respectives - peut également être utilisée s'il s'agit de données cellulaires, ou une autre source fournissant la répartition de la population du pays concerné. Ce type de source nous permet d'estimer localement une "distance caractéristique inter-antennes" dans un réseau cellulaire, soit directement si l'information de l'opérateur est disponible, soit en l'estimant par la densité de population, via la forte corrélation qui existe entre la densité d'antennes d'une part et la densité de population d'autre part. C'est cette distance qui nous permettra d'avoir dans notre détermination de stationnarité ou déplacement une précision s'adaptant automatiquement à la zone considérée.

A partir des évènements de signalisation, le dispositif 2 procède à divers calculs et classements afin d'affecter des labels à des segments temporels. En effet, deux évènements de signalisation définissent par leurs marqueurs de temps respectifs un segment temporel. Ce segment temporel (ci-après segment) peut être utilisé pour qualifier un état de trajectoire. Par exemple, il est possible d'adjoindre un label du type "arrêt", qui signifie qu'un dispositif mobile donné est considéré comme n'ayant pas bougé d'un emplacement qui est associé au segment.

Le but de l'invention est de produire des données de trajectoire comprenant, pour un identifiant de dispositif de communication mobile donné, une suite de segments, chacun présentant deux marqueurs de temps comme bornes temporelles, un emplacement lorsqu'il s'agit d'un arrêt, et un label qui qualifie la trajectoire associée à ce segment. Dans le cadre de l'invention, six types de labels sont envisagés : absent, éteint, arrêt, mouvement, arrêt-mouvement et présence. Comme on le verra par la suite, les deux derniers types de label sont optionnels.

Le label absent et le label éteint sont assez proches et signifient l'absence d'évènements de signalisation pendant une durée établie. Ces labels servent à réaliser un pré-découpage temporel des événements de signalisation associés à un dispositif de communication mobile comme cela apparaîtra plus bas. Le label absent et le label mouvement sont connus du brevet FR 3 039 737 A1 de la Demanderesse et désignent respectivement un arrêt, c'est-à-dire une position considérée comme stationnaire, ou un mouvement, c'est-à-dire un déplacement.

Comme on le verra par la suite, leur définition a néanmoins évolué. En effet, dans les demandes précédentes de la Demanderesse, les évènements de signalisation étaient parcourus pour prédéfinir des segments d'arrêt ou de mouvement, puis les segments étaient traités par suppression ou regroupement ou conversion selon un ordre choisi. Dans le cadre de l'invention, c'est l'unité de traitement qui associe ces labels à chaque segment, selon une méthode qui vise à réduire le bagot.

Le label arrêt-mouvement désigne un cas où le dispositif mobile de communication s'est manifestement déplacé entre deux localisations successives, mais à une vitesse moyenne trop lente pour que l'on puisse considérer que le déplacement a eu lieu sur l'ensemble de la période.

Enfin, le label présence indique que le dispositif de communication mobile est situé dans une zone donnée, sans qu'il soit possible de définir s'il est en mouvement ou stationnaire, comme lorsqu'une seule localisation est remontée sur l'ensemble de la période considérée.

Ces deux derniers labels sont optionnels, et peuvent soit être retournés avec les données de trajectoire pour fournir des données de trajectoire enrichies, soit être réduits en label arrêt ou mouvement comme on le verra dans la suite.

Dans ce qui suit, un segment pourra être identifié par son label, c'est-à-dire qu'un segment d'arrêt signifie un segment qui présente un label de type arrêt. De même, les segments pourront être regroupés en fonction de leurs labels respectifs, c'est-à-dire que les segments de mouvement désigneront tous les segments dont le label est de type mouvement.

La mémoire 4 peut être tout type de stockage de données propre à recevoir des données numériques : disque dur, disque dur à mémoire flash, mémoire flash sous toute forme, mémoire vive, disque magnétique, stockage distribué localement ou dans le cloud, etc.

Dans l'exemple décrit ici, la mémoire 4 reçoit toutes les données qui concernent le dispositif 2, c'est-à-dire les programmes et logiciels instanciant l'unité de pré-traitement 6, l'unité de traitement 8 et l'unité de post-traitement 10, les paramètres et hyperparamètres de ceux-ci, les poids des réseaux de neurones, les sorties et données intermédiaires des réseaux de neurones, les données des évènements de signalisation reçues en entrée (le cas échéant), les valeurs intermédiaires générées, les données stockées en mémoire tampon, ainsi que les données de trajectoire en sortie. Les données calculées par le dispositif peuvent être stockées sur tout type de mémoire similaire à la mémoire 4, ou sur celle-ci. Ces données peuvent être effacées après que le dispositif a effectué ses tâches ou conservées.

L'unité de pré-traitement 6, l'unité de traitement 8 (y inclus le lisseur 12 et le compacteur 14) et l'unité de post-traitement 10 accèdent directement ou indirectement à la mémoire 4. Ils peuvent être réalisés sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, portable, tablette ou smartphone, d'une puce dédiée de type FPGA ou SoC, d'une ressource de calcul sur une grille ou dans le cloud, d'une grappe de processeurs graphiques (GPUs), d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Des processeurs dédiés à l'apprentissage automatique pourront aussi être envisagés.

Il apparaîtra par ailleurs que le découpage du dispositif 2 en trois unités fonctionnelles reproduit le flux de traitement des évènements par celui-ci. Ce découpage n'est néanmoins pas figé : l'unité de pré-traitement 6, l'unité de traitement 8 et l'unité de post-traitement 10 pourraient être partiellement ou entièrement fusionnées, ou encore être séparées en unité plus fine comme cela est présenté avec le lisseur 12 et le compacteur 14.

La figure 2 représente un exemple de mise en œuvre du dispositif 2. Cette boucle commence dans une opération 200 par l'exécution d'une fonction Init() par l'unité de pré-traitement 6. Dans cette opération, l'unité de pré-traitement 6 reçoit les évènements de signalisation et les prépare à leur traitement. Pour cela, si les évènements de signalisation sont associés à des identifiants de dispositif mobile de communication distincts, ils sont séparés et regroupés en fonction de ces derniers. De plus, comme les évènements de signalisations sont traités principalement sur la base de leur temporalité, la fonction Init() peut les assembler par marqueurs de temps croissants ou décroissants, afin d'accélérer les traitements ultérieurs. Une fois les évènements de signalisation regroupés par identifiant de dispositif de communication mobile et arrangés temporellement, la fonction Init() peut les parcourir afin d'y déterminer les segments dont le label est de type absent ou éteint. Comme explicité plus haut, ces labels correspondent respectivement à l'absence d'évènement de signalisation pendant une durée dépassant un seuil donné, par exemple de l'ordre de deux heures ou plus, et à la présence d'un évènement de signalisation indiquant une extinction du signal cellulaire (soit parce que le dispositif est éteint, soit parce que la connexion cellulaire est volontaire coupée), pendant une durée dépassant un seuil, par exemple de plus de 5 minutes.

Ces premiers segments sont importants, car ils définissent un premier découpage temporel des évènements de signalisation. Ainsi, dans les opérations suivantes, ce ne sont pas tous les évènements de signalisation qui sont considérés, mais les évènements de signalisation dont les marqueurs de temps sont compris entre deux segments dont le label est de type absent ou éteint. Ces segments définissent ainsi plusieurs séquences au sein des évènements de signalisation qui sont reçus en entrée, et ces séquences sont traitées indépendamment les unes des autres. Le dispositif 2 pourra d'ailleurs les traiter de manière séquentielle, en parallèle, ou un mélange des deux.

Lorsque les évènements de signalisation reçus en entrée ne contiennent pas explicitement de rayon de localisation, la fonction Init() peut également être agencée pour générer ces données lorsque cela est possible, ou pour fournir une valeur générique sinon. Dans la suite, le rayon de localisation sera désigné par la référence dmax. Ce rayon est associé à la densité d'antennes dans chaque zone géographique et permet de définir des seuils plus pertinents, puisque reliés à la densité réelle.

Une fois les séquences déterminées par l'opération 200, l'unité de pré-traitement, est agencée pour exécuter une fonction PreT() dans une opération 210. La fonction PreT() a pour rôle de pré-découper chaque séquence en arrêts longs, et de détecter les segments d'arrêt-mouvement de manière optionnelle.

La figure 3 représente un exemple de mise en œuvre de la fonction PreT(). Dans une opération 300, une fonction LongS() est exécutée. La fonction LongS() a pour rôle d'identifier dans les évènements de signalisation des arrêts qui présentent une durée importante, c'est-à-dire supérieure à 30 minutes par exemple.

Afin de tenir compte du bagot, cette fonction n'exige pas que les évènements de signalisation soient tous associés à un même emplacement, mais seulement que ces emplacements restent suffisamment proches les uns des autres. Pour cela, les emplacements associés à chaque évènement de signalisation sont d'abord lissés en les moyennant avec les emplacements d'un nombre choisi d'évènements de signalisation voisins temporellement. Cela permet de réduire le bruit sur les emplacements. Une fois les emplacements ainsi lissés, la fonction LongS() détecte des phases de stationnarité, en cherchant les périodes de durée maximale pendant lesquelles la localisation lissée du dispositif de communication mobile reste dans un certain rayon - tiré par exemple du rayon de localisation ou d'une moyenne des rayons de localisation associés aux évènements de signalisation concernés, ou tiré de dmax - à partir d'un point de référence. Lorsque le seuil est tiré de dmax, cela permet de détecter des arrêts longs assez resserrés en zone urbaine, sans réduire la qualité de détection d'arrêts longs en zone rurale, où des antennes très éloignées seraient pénalisantes en cas de seuil fixe. En variante, le lissage préalable n'est pas appliqué. Dans encore une autre variante, la fonction LongS() est appliquée avec lissage préalable et sans lissage préalable, et c'est la phase de stationnarité la plus longue qui est retenue.

La réunion des évènements de signalisation associés définit à chaque fois un segment d'arrêt long. Dans la suite, ces segments seront traités comme des segments d'arrêt, mais leur qualification de "longs" est importante pour le traitement par l'unité de traitement comme on le verra plus bas. De manière optionnelle, un contrôle final peut être opéré pour tester si deux segments d'arrêt long successifs et proches dans le temps peuvent être fusionnés ou non, par exemple sur la base de leurs emplacements respectifs. Dans le cas contraire, il est possible de générer entre ces deux segments d'arrêt long un segment de mouvement, qui sera labellisé de sorte à ne pas pouvoir être modifié par aucun des traitements ultérieurs.

Une fois la fonction LongS() terminée, les segments d'arrêt mouvement peuvent être détectés dans une opération 310 au moyen d'une fonction StMv(). La fonction StMv() est, comme on l'a expliqué, optionnelle, et recherche des segments formés par deux événements de signalisation successifs qui sont séparés d'une durée supérieure à un seuil (par exemple 15 minutes, ou un seuil tiré de dmax), et dont les emplacements sont suffisamment éloignés pour être sûr qu'il y a eu un déplacement (par exemple, la distance entre leurs emplacements respectifs excède 1km, ou un seuil tiré de dmax), mais tels que la vitesse est trop faible pour que toute la période corresponde à un segment de mouvement. Dans le cas où ces emplacements sont trop proches, c'est-à-dire que leur distance est inférieure à un autre seuil, par exemple 100m ou un seuil tiré de dmax, le segment est labellisé en arrêt. Enfin, la fonction StMv() marque les segments qu'elle a labellisés en arrêt ou en arrêt-mouvement afin que ceux-ci ne soient pas modifiés par l'unité de traitement.

Une fois l'opération 210 terminée, les évènements de signalisation sont prétraités, c'est-à-dire qu'ils ont été regroupés, découpés en séquences, et redécoupés en portions entre arrêts longs, avec détection d'arrêt-mouvements ou d'arrêts le cas échéant.

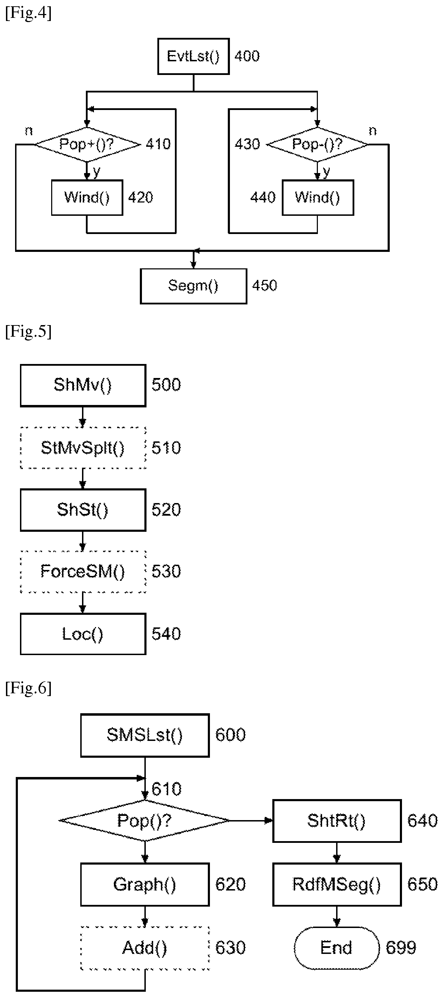

L'unité de traitement 8 opère alors dans une opération 220 en exécutant une fonction T(). La figure 4 représente un exemple de mise en œuvre de la fonction T(). D'un point de vue haut niveau, la fonction T() a pour but de parcourir les évènements non associés à un segment labellisé entre deux arrêts longs, chacun définissant une borne d'une fenêtre glissante de taille fixe, et en déterminant pour chaque fenêtre un label de type arrêt ou de type mouvement en fonction des évènements de signalisation contenus dans cette fenêtre. En variante, la taille peut ne pas être parfaitement fixe, et la fonction T() peut aller chercher le point le plus pertinent, par exemple le plus proche de cette taille fixe. Une fois les évènements non associés à un segment labellisé entre deux arrêts longs parcourus par marqueurs de temps croissant et par marqueurs de temps décroissants, les labels des fenêtres sont projetés sur chaque segment qu'elles contiennent, et chaque segment se voit associé un label en fonction de cette projection. De manière optionnelle, la fonction T() peut opérer en ne labellisant aucune fenêtre depuis un événement donné de marqueur de temps t si aucun événement n'est trouvé dans une plage t+3 minutes et t+30 minutes. Cela permet d'éviter de retenir de manière systématique le premier point après t+30 minutes, ce qui génère du bruit.

Ainsi, dans une opération 400, le lisseur 12 exécute une fonction EvtLst() qui récupère la liste (ou un tableau) de tous les évènements de signalisation entre deux segments d'arrêt long (ou un segment absent ou éteint et un segment d'arrêt long le cas échéant), et en exclut les évènements de signalisation qui appartiennent à un segment déjà labellisé, que ce soit en mouvement par l'opération 300, ou en arrêt-mouvement ou arrêt par l'opération 310.

Ensuite, deux boucles sont réalisées, partant chacune d'une extrémité temporelle de la liste issue de l'opération 400, afin de parcourir celle-ci dans le sens croissant et décroissant des marqueurs de temps.

Pour cela, le lisseur 12 dépile la liste dans une opération 410 en exécutant une fonction Pop+() (respectivement dans une opération 430 en exécutant une fonction Pop-()) qui récupère l'évènement de signalisation de marqueur de temps immédiatement croissant (respectivement décroissant) de la liste. S'il existe un tel évènement de signalisation, alors le lisseur 12 exécute une fonction Wind() dans une opération 420 (respectivement 440), en définissant une fenêtre de durée environ égale à 15 minutes qui comprend les évènements de la liste dont les marqueurs de temps sont compris entre le marqueur de temps de l'évènement de l'opération 410 (respectivement l'opération 430) et 15 minutes après (respectivement 15 minutes avant), puis compare la distance entre l'emplacement de l'évènement issu de l'opération 410 (respectivement l'opération 430) et l'emplacement de l'évènement de signalisation le plus lointain temporellement dans la fenêtre. Si la distance entre ces deux emplacements excède une distance seuil choisie (par exemple 8 fois dmax, ou moins de 15 fois dmax, soit environ 1 kilomètre en zone urbaine et environ dix kilomètres en zone rurale), alors la fenêtre est associée à un label mouvement, et sinon à un label arrêt.

Lorsque tous les évènements de signalisation ont été parcourus, l'opération 410 et l'opération 430 retournent une valeur négative, et le compacteur 14 est appelé pour traiter les fenêtres labellisées et qualifier les segments dans une opération 450 en exécutant une fonction Segm(). Dans l'exemple décrit ici, la fonction Segm() parcourt chaque segment défini par une paire d'évènements de signalisation dont les marqueurs de temps sont consécutifs, sélectionne les fenêtres qui recouvrent temporellement ce segment, et compte le nombre de labels arrêt et le nombre de labels mouvement. Si le nombre de labels mouvement excède le nombre de labels arrêt, alors le segment se voit attribuer un label de type mouvement. Sinon, il se voit attribuer un label de type arrêt.

En sortie, tous les segments sont donc labellisés, soit absent, soit éteint, soit arrêt (long), soit mouvement (non modifiable), soit arrêt, soit mouvement. Dans ce qui précède, la liste d'évènements de signalisation est parcourue dans les deux sens du temps en parallèle. En variante, elle pourrait être parcourue d'abord dans un sens, puis dans l'autre. Toujours en variante, elle pourrait être parcourue, mais seulement dans un sens. De plus, la fonction Segm() pourrait également tenir compte des marqueurs de temps des segments adjacents, afin, que 15 évènements de signalisation en 5 minutes aient le même poids que 5 évènements de signalisation dans le même temps.

Une fois que l'opération 220 est terminée, l'unité de post-traitement 10 vient réduire les segments d'arrêt et de mouvement selon plusieurs opérations. La Demanderesse a découvert que l'ordre présenté ici apporte une grande précision aux données de trajectoires produites en sortie, mais qu'un autre ordre apporte déjà un grand progrès par rapport aux méthodes connues.

Ainsi, l'unité de post-traitement 10 exécute une fonction PostT() dans une opération 230. La figure 5 représente un exemple de mise en œuvre de la fonction PostT().

D'un point de vue haut niveau, la fonction PostT() traite d'abord les segments de mouvement court, puis convertit optionnellement les segments d'arrêt-mouvement, puis traite les segments d'arrêt courts, puis force optionnellement tous les segments à être de type arrêt ou mouvement, avant d'affecter à chaque segment d'arrêt une localisation.

Dans une opération 500, l'unité de post-traitement commence par exécuter une fonction ShMv(). La fonction ShMv() parcourt tous les segments de mouvement et détermine ceux qui présente une durée inférieure à une durée seuil, par exemple 3 minutes, sauf si ce segment a été marqué comme non modifiable à l'opération 300. Tous les segments résultants se voient affecter un label de type arrêt si au moins un segment qui leur est voisin présente un label de type arrêt. Si ce n'est pas le cas, et si les labels présence sont utilisés, alors c'est un label présence qui est affecté. Si les labels présence ne sont pas utilisés, un label arrêt est affecté dans tous les cas.

Ensuite, dans une opération optionnelle 510, l'unité de post-traitement 10 exécute une fonction StMpSplt(). Cette fonction parcourt tous les segments d'arrêt-mouvement, et les convertit si le segment d'arrêt-mouvement est entouré par un segment d'arrêt et un segment de mouvement, quel que soit leur ordre. Dans ce cas, il est considéré que le segment d'arrêt représente le véritable arrêt, et le segment de mouvement représente le véritable mouvement, et le segment d'arrêt-mouvement est décomposé en fonction de la vitesse observée sur les 15 minutes du mouvement « collées » à ce segment d'arrêt-mouvement et fusionné en conséquence. Ainsi, le segment d'arrêt et le segment de mouvement sont étendus proportionnellement en supprimant le segment d'arrêt-mouvement, et en créant une borne temporelle commune située au sein de ce dernier.

Ensuite, ou lorsque les labels d'arrêt-mouvement ne sont pas utilisés, les segments d'arrêt courts sont traités par une fonction ShSt() exécutée par l'unité de post-traitement 10 dans une opération 520. De manière similaire à l'opération 510, cette fonction convertit les segments d'arrêt de courte durée (par exemple inférieure à 5 minutes), s'ils sont voisins d'un segment de mouvement, en segment de mouvement par fusion avec ces derniers, et en segment de type présence sinon lorsque ceux-ci sont utilisés. Dans le cas contraire, ils sont convertis en segment de mouvement, avec fusion éventuelle avec un segment de mouvement voisin le cas échéant.

Lorsqu'il est souhaité que les données de trajectoire ne contiennent que des segments de type arrêt ou mouvement une fonction ForceSM() peut être exécuté dans une opération optionnelle 530 par l'unité de post-traitement 10. Dans cette fonction, les segments d'arrêt-mouvement qui n'ont pas été convertis par l'opération 510 et les segments présence peuvent être convertis en segment d'arrêt ou en segment de mouvement. Par exemple, si un voisin est un segment d'arrêt, alors le segment est converti en segment de mouvement. Sinon, il est converti en segment d'arrêt.

Après l'opération 520 ou l'opération 530 le cas échéant, les segments ont été entièrement post-traités et sont prêts à être exploités pour être retournés en tant que données de trajectoire. Afin de raffiner leurs emplacements, chaque segment d'arrêt résultant est parcouru dans une opération 540 par une fonction Loc() qui vient calculer le barycentre de tous les évènement de signalisation qui sont compris entre les bornes de ces segments. Ainsi, l'emplacement qui est associé à chaque segment d'arrêt est lissée par l'ensemble des évènements de signalisation qu'il contient. Le rayon de localisation de ces évènements peut également être moyenné pour être associé à ces segments. Afin de déterminer un emplacement encore plus précis, la fonction Loc() peut exécuter un ou plusieurs des traitements suivants :
- éliminer des points « extrêmes », détectés en comparant le déplacement du barycentre si les points les plus éloignés du barycentre courant sont supprimés, et répéter cette suppression de manière itérative, jusqu'à ce que le déplacement ne soit plus significatif, ou qu'un nombre de répétitions soit atteint, et
- estimer un « rayon » de la zone de stop, en prenant en considération à la fois le dmax local et la dispersion des événements du stop (par exemple max (3*dmax, quantile à 80 % des distances au barycentre)), et écarter les évènements qui ne sont pas dans ce rayon pour le calcul du barycentre.

La même opération peut être exécutée sur les segments de type présence.

Enfin, de manière optionnelle, une segmentation des segments d'arrêt peut permettre de retenir, pour les segments d'arrêt dont les emplacements sont très proches, et par exemple inférieur à un seuil tiré de leur rayon de localisation, un seul et unique emplacement.

La Demanderesse a découvert que les opérations 200 à 230 permettent de produire des données de trajectoire dont la fidélité excède grandement celle des solutions antérieures. En travaillant sur le bagot, elle a également découvert qu'il est possible d'effectuer une opération supplémentaire dite de raffinage qui permet de retraiter les segments de mouvement dans les données de trajectoire, afin de rendre la trajectoire encore plus fidèle.

Ainsi, la Demanderesse est partie du principe que le bagot est un bruit de nature assez imprévisible qui vient briser la chaîne de déplacement "logique" temporellement. Dit autrement, à cause du bagot, le dispositif mobile de communication fait virtuellement un détour entre deux localisations qui sont pourtant proches, sans que cela soit facilement détectable. Afin de contourner le problème, la Demanderesse s'est intéressée à l'enrichissement des données de signalisation, afin de s'offrir la possibilité de reconstruire la trajectoire qui est la plus probable. Pour cela, elle a donc étudié comment rajouter de l'information aux évènements de signalisation pour recalculer une trajectoire plus probable.

Pour cela, elle est partie de l'idée que l'on peut voir la suite d'évènements de signalisation comme un graphe "pauvre" qui relie de manière temporellement croissante les évènements de signalisation deux à deux (c'est-à-dire un graphe ou chaque sommet à un unique voisin amont et aval au maximum). Comme ce graphe est bruité de manière indétectable, elle a cherché à l'enrichir en générant des liaisons "probables" entre les évènements de signalisation temporellement proches.

Ainsi, le dispositif 2 est agencé pour exécuter une fonction Ref() dans une opération 240 afin de procéder à cet enrichissement. La figure 6 représente un exemple de mise en œuvre de la fonction Ref() par l'unité de post-traitement 10.

Dans une opération 600, une fonction SMSLst() est exécutée qui parcourt les données de trajectoire et qui les découpe en séquences dont les extrémités sont des segments d'arrêt et qui comportent entre eux au moins un segment de mouvement. Chaque séquence initialise un graphe sous la forme d'une ligne qui lie les évènements de signalisation compris dans chaque segment de la séquence deux à deux, par marqueurs de temps croissants. Les séquences sont alors parcourues séparément, comme après l'opération 200.

Chaque séquence est traversée afin d'enrichir de proche en proche le graphe représentant les chemins possibles entre évènements de signalisation dans une boucle. Pour cela, la séquence est dépilée d'un évènement de signalisation courant dans une opération 610, puis une fonction Graph() est exécutée dans une opération 620. La fonction Graph() utilise l'évènement de signalisation courant et enrichit le graphe en reliant entre eux dans le graphe tous les évènements de signalisation dont le marqueur de temps est dans une fenêtre de durée choisie (par exemple 5 minutes, ou une valeur tirée de la valeur dmax) centrée sur l'évènement de signalisation courant. De manière optionnelle, avant de relier entre eux deux évènements de signalisation dans le graphe, la fonction Graph() peut vérifier que leurs emplacements ne présentent pas entre eux une distance excédant un seuil choisi. Cela permet d'éviter de surcharger le graphe inutilement et d'interdire de faire de trop grands « sauts » dans la trajectoire, notamment pour des déplacements à très grande vitesse.

De manière optionnelle, si l'opération 620 n'ajoute aucun lien au graphe, une fonction Add() peut être exécutée dans une opération 630. La fonction Add() peut sélectionner les évènements de signalisation antérieurs à l'évènement de signalisation courant d'un seuil de temps choisi (par exemple 1 minute), ainsi que les évènements de signalisation postérieurs à l'événement de signalisation immédiatement consécutif à l'évènement de signalisation courant de ce même seuil de temps choisi, et les relier tous entre eux. Cela permet avantageusement, quand deux événements consécutifs sont séparés par un temps supérieur au seuil choisi, de rendre possible le fait que le plus court chemin retenu ne passe pas par ces deux points. La raison est que, sans ce traitement, ce couple d'événements devient le seul « pont » dans le graphe reliant les points avant le premier aux points après le second. Dès lors, si l'un des deux événements a une localisation très bruitée, on se retrouverait à retenir un point potentiellement « erroné ».

Ensuite, la boucle se répète avec l'opération 610, jusqu'à ce que la séquence ait entièrement été parcourue. Une fonction ShtRt() est alors exécutée dans une opération 640 pour déterminer le plus court chemin au sein du graphe enrichi. Cette fonction détermine le plus court chemin au sein du graphe enrichi, la fonction de poids étant définie par la distance entre les emplacements respectifs de deux évènements de signalisation reliés dans le graphe. Il en résulte des données de trajectoires qui lissent le parcours géographiquement selon la trajectoire la plus courte telle que probable en vertu des évènements de signalisation qui la composent.

Enfin, une fonction RdfMSeg() est exécutée dans une opération 650 afin de recomposer les segments à partir de la nouvelle suite d'évènements de signalisation qui a été déterminée, puis la fonction Ref() se termine dans une opération 699.

Il convient de noter que, afin d'assurer la continuité des emplacements des données de trajectoire, si un segment de mouvement à simplifier est voisin d'au moins un segment d'arrêt, le point de départ et/ou d'arrivée du segment de mouvement est contraint à être localisé à l'emplacement du segment d'arrêt en question. Dans le cas d'une transition entre un segment d'arrêt et un segment de mouvement située à une heure ne correspondant pas à un événement de signalisation, un évènement de signalisation fictif est généré en prenant l'emplacement du segment d'arrêt et le marqueur de temps du segment de mouvement.

L'opération 240 est optionnelle, et les opérations 200 à 230 peuvent être exécutées indépendamment de celle-ci. De la même manière, l'opération 240 est indépendante des opérations 200 à 230, dès lors que les données de trajectoire et les évènements de signalisation correspondants sont accessibles. La Demanderesse a ainsi découvert à sa grande surprise que l'opération 240 est totalement compatible avec les données de trajectoires déterminées par le biais des méthodes décrites dans le brevet européen publié sous le numéro EP 3 329 696 et la demande de brevet publiée sous le numéro EP 3 586 319.

Dans ce qui précède, des données de type GNSS ou GPS peuvent également être utilisées, de manière alternative aux données de téléphonie mobile. L'idée est la suivante : si des données GNSS ou GPS sont disponibles, elles sont utilisées en priorité. Lorsque ces données ne sont pas disponibles, les données de téléphonie mobile traitées par l'invention sont utilisées. Dans ce cas, les données GNSS ou GPS peuvent être traitées conformément à l'invention, avec une distance dmax d'environ 10 mètres par exemple, et avec une durée d'absence d'événements pour aboutir à un segment « Absent » courte (par exemple 30 minutes).

## Revendications

1. Dispositif de détermination de trajectoire agencé pour recevoir des évènements de signalisation de réseau de téléphonie mobile ou sans-fil comprenant chacun un identifiant de dispositif mobile de communication, un marqueur de temps et un identifiant de signalisation associé à un emplacement et à un rayon de localisation, et pour retourner des données de trajectoire comprenant des segments de trajectoire comprenant chacun deux marqueurs de temps formant des bornes tirés des marqueurs de temps des évènements de signalisation, chaque segment étant associé à un label de type mouvement ou de type arrêt, le dispositif étant agencé pour raffiner les segments de trajectoire associés à un label de type mouvement
en regroupant les évènements de signalisation correspondant à des segments de trajectoires associés à un label de type mouvement compris entre deux segments de trajectoires associés à un label de type arrêt dans des groupes de mouvement,
en générant un graphe pour chaque groupe mouvement au sein duquel chaque évènement de signalisation est relié à l'évènement de signalisation dont le marqueur de temps lui est immédiatement successif temporellement et à tout évènement de signalisation tel que la durée entre leurs marqueurs de temps respectifs est inférieure à une durée de seuil de voisinage,
en calculant le plus court chemin au sein de chaque graphe à partir des distances entre les emplacements associés à chaque évènement de signalisation, et
en retournant des données de trajectoire modifiées dans lesquelles les segments de trajectoire associés à un label de type mouvement sont redéfinis par paire de marqueurs de temps consécutifs à partir des évènements de signalisation retenus pour le chemin le plus court calculé pour chaque graphe.

2. Dispositif selon la revendication 1, dans lequel le dispositif est agencé pour exclure de chaque graphe les liaisons pour lesquelles la distance entre les emplacements des évènements de signalisation excède une distance seuil de voisinage, sauf lorsque cette exclusion a pour conséquence qu'un évènement de signalisation qui n'est pas une extrémité d'un graphe ne présente aucune liaison vers un évènement de signalisation dont le marqueur de temps est ultérieur, ou aucune liaison vers un évènement de signalisation dont le marqueur de temps est antérieur.

3. Dispositif selon la revendication 1 ou 2, dans lequel; lorsque une opération a pour conséquence qu'un évènement de signalisation qui n'est pas une extrémité d'un graphe ne présente qu'une liaison vers un évènement de signalisation dont le marqueur de temps est ultérieur, le dispositif est agencé pour sélectionner les évènements de signalisation présentant un marqueur de temps antérieur d'une durée de seuil d'extension à celui de cet évènement de signalisation, l'évènement de signalisation qui lui est immédiatement consécutif et les évènements de signalisations présentant un marqueur de temps postérieur de la durée de seuil d'extension à l'évènement de signalisation qui lui est immédiatement consécutif, et pour relier entre eux tous les évènements de signalisation ainsi sélectionnés dans le graphe concerné.

4. Procédé de détermination de trajectoire comprenant les opérations suivantes :
a) recevoir des évènements de signalisation de réseau de téléphonie mobile ou sans-fil comprenant chacun un identifiant de dispositif mobile de communication, un marqueur de temps et un identifiant de signalisation associé à un emplacement et à un rayon de localisation,
b) retourner des données de trajectoire comprenant des segments de trajectoire comprenant chacun deux marqueurs de temps formant des bornes tirés des marqueurs de temps des évènements de signalisation, chaque segment étant associé à un label de type mouvement ou de type arrêt,
c) regrouper les évènements de signalisation correspondant à des segments de trajectoires associés à un label de type mouvement compris entre deux segments de trajectoires associés à un label de type arrêt dans des groupes de mouvement,
d) générer un graphe (620) pour chaque groupe mouvement au sein duquel chaque évènement de signalisation est relié à l'évènement de signalisation dont le marqueur de temps lui est immédiatement successif temporellement et à tout évènement de signalisation tel que la durée entre leurs marqueurs de temps respectifs est inférieure à une durée de seuil de voisinage,
e) calculer le plus court chemin (640) au sein de chaque graphe à partir des distances entre les emplacements associés à chaque évènement de signalisation, et
f) retourner des données de trajectoire modifiées (650) dans lesquelles les segments de trajectoire associés à un label de type mouvement sont redéfinis par paire de marqueurs de temps consécutifs à partir des évènements de signalisation retenus pour le chemin le plus court calculé pour chaque graphe.

5. Procédé selon la revendication 4, dans :lequel l'opération d) comprend exclure de chaque graphe les liaisons pour lesquelles la distance entre les emplacements des évènements de signalisation excède une distance seuil de voisinage, sauf lorsque cette exclusion a pour conséquence qu'un évènement de signalisation qui n'est pas une extrémité d'un graphe ne présente aucune liaison vers un évènement de signalisation dont le marqueur de temps est ultérieur, ou aucune liaison vers un évènement de signalisation dont le marqueur de temps est antérieur.

6. Procédé selon la revendication 4 ou 5, dans lequel lorsque l'opération d) a pour conséquence qu'un évènement de signalisation qui n'est pas une extrémité d'un graphe ne présente qu'une liaison vers un évènement de signalisation dont le marqueur de temps est ultérieur, les évènements de signalisation présentant un marqueur de temps antérieur d'une durée de seuil d'extension à celui de cet évènement de signalisation, l'évènement de signalisation qui lui est immédiatement consécutif et les évènements de signalisations présentant un marqueur de temps postérieur de la durée de seuil d'extension à l'évènement de signalisation qui lui est immédiatement consécutif sont sélectionnés et reliés entre eux dans le graphe concerné.

7. Programme informatique comprenant des instructions pour exécuter le procédé selon l'une des revendications 4 à 6 lorsqu'il est exécuté par ordinateur.

8. Support de stockage de données sur lequel est enregistré le programme informatique selon la revendication 7.

## Patentansprüche

1. Vorrichtung zur Trajektorienbestimmung, die angeordnet ist, um Mobilfunk- oder Drahtlosnetzwerk-Signalisierungsereignisse zu empfangen, die jeweils eine Kennung einer mobilen Kommunikationsvorrichtung, einen Zeitstempel und eine Signalisierungskennung, die mit einem Standort und einem Lokalisierungsradius verknüpft sind, und um Trajektoriendaten, die Trajektoriensegmente umfassen, die jeweils zwei Zeitmarker umfassen, die aus den Zeitmarkern der Signalisierungsereignisse hergeleitete Marksteine bilden, zurückzuschicken, wobei jedes Segment mit einem Label vom Typ Bewegung oder vom Typ Stopp verknüpft ist, wobei die Vorrichtung angeordnet ist, um die Trajektoriensegmente, die mit einem Label vom Typ Bewegung verknüpft sind, zu verfeinern
durch Zusammenfassen der Signalisierungsereignisse, die den Trajektoriensegmenten entsprechen, die mit einem Label vom Typ Bewegung verknüpft sind, das zwischen zwei Trajektoriensegmenten, die mit einem Label vom Typ Stopp verknüpft sind, umfasst ist, in Bewegungsgruppen,
durch Erzeugen eines Graphen für jede Bewegungsgruppe, in dem jedes Signalisierungsereignis mit dem Signalisierungsereignis, dessen Zeitmarker ihm zeitlich unmittelbar nachfolgt, und mit jedem Signalisierungsereignis, verbunden ist, sodass die Dauer zwischen ihren jeweiligen Zeitmarkern kürzer ist als eine Nachbarschaftsschwellendauer,
durch Berechnen des kürzesten Wegs innerhalb eines jeden Graphen aus den Abständen zwischen den mit jedem Signalisierungsereignis verknüpften Standorten, und
durch Zurückschicken von modifizierten Trajektoriendaten, in denen die Trajektoriensegmente, die mit einem Label vom Typ Bewegung verknüpft sind, durch Paare aufeinanderfolgender Zeitmarker auf der Grundlage der Signalisierungsereignisse neu definiert werden, die für den kürzesten berechneten Weg für jeden Graphen berücksichtigt werden.

2. Vorrichtung nach Anspruch 1, wobei die Vorrichtung angeordnet ist, um aus jedem Graphen die Verbindungen auszuschließen, bei denen der Abstand zwischen den Standorten der Signalisierungsereignisse einen Nachbarschaftsschwellenabstand überschreitet, es sei denn, dieser Ausschluss hat zur Folge, dass ein Signalisierungsereignis, das kein Ende eines Graphen ist, keine Verbindung zu einem Signalisierungsereignis, dessen Zeitmarker später ist, oder keine Verbindung zu einem Signalisierungsereignis aufweist, dessen Zeitstempel früher liegt.

3. Vorrichtung nach Anspruch 1 oder 2, wobei wenn ein Vorgang zur Folge hat, dass ein Signalisierungsereignis, das kein Ende eines Graphen ist, nur eine Verbindung zu einem Signalisierungsereignis aufweist, dessen Zeitmarker später ist, die Vorrichtung angeordnet ist, um die Signalisierungsereignisse auszuwählen, die einen Zeitmarker um eine Verlängerungsschwellendauer vor diesem Signalisierungsereignis aufweisen, das unmittelbar darauf folgende Signalisierungsereignis und die Signalisierungsereignisse, die einen Zeitmarker um eine Verlängerungsschwellendauer nach diesem Signalisierungsereignis aufweisen, das unmittelbar nachfolgt, und um alle so ausgewählten Signalisierungsereignisse in dem betreffenden Graphen miteinander zu verbinden.

4. Verfahren zur Trajektorienbestimmung, das folgende Vorgänge umfasst:
a) Empfangen von Signalisierungsereignissen des Mobilfunk- oder Drahtlosnetzwerks, die jeweils eine Kennung einer mobilen Kommunikationsvorrichtung, einen Zeitstempel und eine Signalisierungskennung umfassen, die mit einem Standort und einem Lokalisierungsradius verknüpft sind,
b) Zurückschicken von Trajektoriendaten, die Trajektoriensegmente umfassen, die jeweils zwei Zeitmarker umfassen, die aus den Zeitmarkern der Signalisierungsereignisse hergeleitete Marksteine bilden, wobei jedes Segment mit einem Label vom Typ Bewegung oder vom Typ Stopp verknüpft ist,
c) Zusammenfassen der Signalisierungsereignisse, die den Trajektoriensegmenten entsprechen, die mit einem Label vom Typ Bewegung verknüpft sind, das zwischen zwei Trajektoriensegmenten, die mit einem Label vom Typ Stopp verknüpft sind, umfasst ist, in Bewegungsgruppen,
d) Erzeugen eines Graphen (620) für jede Bewegungsgruppe, in dem jedes Signalisierungsereignis mit dem Signalisierungsereignis, dessen Zeitmarker ihm zeitlich unmittelbar nachfolgt, und mit jedem Signalisierungsereignis, verbunden ist, sodass die Dauer zwischen ihren jeweiligen Zeitmarkern kürzer ist als eine Nachbarschaftsschwellendauer,
e) Berechnen des kürzesten Wegs (640) innerhalb eines jeden Graphen aus den Abständen zwischen den mit jedem Signalisierungsereignis verknüpften Standorten, und
f) Zurückschicken von modifizierten Trajektoriendaten (650), in denen die Trajektoriensegmente, die mit einem Label vom Typ Bewegung verknüpft sind, durch Paare aufeinanderfolgender Zeitmarker auf der Grundlage der Signalisierungsereignisse neu definiert werden, die für den kürzesten berechneten Weg für jeden Graphen berücksichtigt werden.

5. Verfahren nach Anspruch 4, wobei der Vorgang d) Ausschließen aus jedem Graphen der Verbindungen umfasst, bei denen der Abstand zwischen den Standorten der Signalisierungsereignisse einen Nachbarschaftsschwellenabstand überschreitet, es sei denn, dieser Ausschluss hat zur Folge, dass ein Signalisierungsereignis, das kein Ende eines Graphen ist, keine Verbindung zu einem Signalisierungsereignis, dessen Zeitmarker später ist, oder keine Verbindung zu einem Signalisierungsereignis aufweist, dessen Zeitstempel früher liegt.

6. Verfahren nach Anspruch 4 oder 5, wobei wenn ein Vorgang d) zur Folge hat, dass ein Signalisierungsereignis, das kein Ende eines Graphen ist, nur eine Verbindung zu einem Signalisierungsereignis aufweist, dessen Zeitmarker später ist, die Vorrichtung angeordnet ist, um die Signalisierungsereignisse auszuwählen, die einen Zeitmarker um eine Verlängerungsschwellendauer vor diesem Signalisierungsereignis aufweisen, das unmittelbar darauf folgende Signalisierungsereignis und die Signalisierungsereignisse, die einen Zeitmarker um eine Verlängerungsschwellendauer nach diesem Signalisierungsereignis aufweisen, das unmittelbar nachfolgt, und um alle so ausgewählten Signalisierungsereignisse in dem betreffenden Graphen miteinander zu verbinden.

7. Computerprogramm, das Anweisungen zum Ausführen des Verfahrens nach einem der Ansprüche 4 bis 6 umfasst, wenn es von einem Computer ausgeführt wird.

8. Datenspeichermedium, auf dem das Computerprogramm nach Anspruch 7 gespeichert ist.

## Claims

1. A device for determining a trajectory arranged to receive mobile or wireless telephone network signalling events each comprising a mobile communication device identifier, a time tag, and a signalling identifier associated with a location and with a location radius, and to return trajectory data comprising trajectory segments each comprising two time tags forming boundaries based on the time tags of the signalling events, each segment being associated with a movement type or stop type label, the device being arranged to refine the trajectory segments associated with a movement type label
by grouping the signalling events corresponding to trajectory segments associated with a movement type label between two trajectory segments associated with a stop type label into movement groups,
by generating a graph for each movement group within which each signalling event is linked with the signalling event whose time tag immediately follows it in time and with any signalling event such that the duration between their respective time tags is shorter than a neighbouring threshold duration,
by computing the shortest path within each graph from the distances between the locations associated with each signalling event, and
by returning modified trajectory data in which the trajectory segments associated with a movement type label are redefined by pair of consecutive time tags from the signalling events retained for the shortest path computed for each graph.

2. The device according to claim 1, wherein the device is arranged to exclude from each graph the links for which the distance between the locations of the signalling events exceeds a neighbouring threshold distance, except when this exclusion results in a signalling event that is not an end of a graph not having any link to a signalling event for which the time tag is later, or any link to a signalling event for which the time tag is earlier.

3. The device according to claim 1 or 2, wherein; when an operation results in a signalling event that is not an end of a graph only having a link to a signalling event for which the time tag is later, the device is arranged to select signalling events having a time tag earlier than the extension threshold duration of this signalling event, the signalling event immediately following it and the signalling events having a time tag after the extension threshold duration of the signalling event immediately following it, and to link together all of the signalling events thus selected in the graph in question.

4. A method for determining a trajectory comprising the following operations:
a) receiving mobile or wireless telephone network signalling events each comprising a mobile communication device identifier, a time tag and a signalling identifier associated with a location and with a location radius,
b) returning trajectory data comprising trajectory segments each comprising two time tags forming boundaries based on the time tags of the signalling events, each segment being associated with a movement type or stop type label,
c) grouping the signalling events corresponding to trajectory segments associated with a movement type label between two trajectory segments associated with a stop type label into movement groups,
d) generating a graph (620) for each movement group within which each signalling event is linked with the signalling event whose time tag immediately follows it in time and with any signalling event such that the duration between their respective time tags is shorter than a neighbouring threshold duration,
e) computing the shortest path (640) within each graph from the distances between the locations associated with each signalling event, and
f) returning modified trajectory data (650) wherein the trajectory segments associated with a movement type label are redefined by pair of consecutive time tags from the signalling events retained for the shortest path computed for each graph.

5. The method according to claim 4, wherein operation d) comprises excluding from each graph the links for which the distance between the locations of the signalling events exceeds a neighbouring threshold distance, except when this exclusion results in a signalling event that is not an end of a graph not having any link to a signalling event for which the time tag is later, or any link to a signalling event for which the time tag is earlier.

6. The method according to claim 4 or 5, wherein when operation d) results in a signalling event that is not an end of a graph only having a link to a signalling event for which the time tag is later, the signalling events having a time tag of an extension threshold duration earlier than that of this signalling event, the signalling event immediately following it and the signalling events having a time tag after the extension threshold duration of the signalling event immediately following it are selected and linked together in the graph in question.

7. A computer program comprising instructions to execute the method according to one of claims 4 to 6 when executed by a computer.

8. Data storage medium on which the computer program according to claim 7 is recorded.
